# EUROPÄISCHE PATENTSCHRIFT

(11) **EP 2 595 903 B1**
(45) Veröffentlichungstag und Bekanntmachung des Hinweises auf die Patenterteilung: **10.02.2016**
(21) Anmeldenummer: 11736095.8
(22) Anmeldetag: 25.07.2011
(51) Int. Cl.: B60P 7/16, B60P 7/08, B65D 25/00

(54) **Schutzfuß für ein Betonturmsegment einer Windenergieanlage**
Protective foot for a concrete tower segment of a wind energy plant
Pied de protection pour un segment de tour en béton d'un aérogénérateur

(30) Priorität: 23.07.2010 DE 102010038311
(43) Veröffentlichungstag der Anmeldung: 29.05.2013
(73) Patentinhaber: Wobben Properties GmbH, 26607 Aurich (DE)
(72) Erfinder: ALBRECHTS, Harald, 26624 Moorhusen (DE)
(74) Vertreter: Eisenführ Speiser
(86) Internationale Anmeldenummer: PCT/EP2011/062703
(87) Internationale Veröffentlichungsnummer: WO 2012/010710

(56) Entgegenhaltungen:
- EP-A1- 2 159 412
- WO-A2-2007/093854
- DD-A3- 154 785

## Beschreibung

Die vorliegende Erfindung betrifft einen Schutzfuß für ein Turmschuss-Segment bzw. ein Betonturmsegment einer Windenergieanlage.

Herkömmlicherweise wird ein Turmschuss-Segment bzw. ein (Beton-) Turmsegment durch untergelegte Holzklötze gegen Beschädigung durch den Untergrund geschützt. Um horizontale Bewegung zu vermeiden, kann zwischen Segment und Holzklotz sowie zwischen Holzklotz und Untergrund eine Gummimatte gelegt werden. Alternativ dazu können z. B. beim Transport auf einem Frachtschiff auch Stahlfüße und/oder Stopperplatten auf dem Transportboden verschweißt werden, welche das Segment an einer horizontalen Bewegung hindern sollen.

Bei der Verwendung von Holzklötzen und Gummimatten besteht während des Transports die Gefahr des Verrutschens, wodurch ein ausreichender Schutz für ein Segment nicht mehr gegeben ist. Die Verwendung von Stahlfüßen zur Vermeidung horizontaler Bewegung birgt die Gefahr der Beschädigung des Segmentes. Das ständige Hantieren mit Holzklötzen und Gummimatten bringt erheblichen Aufwand mit sich. Sie bleiben beim Entladen zunächst liegen und müssen im Nachhinein zur weiteren Verwendung eingesammelt werden, während das Segment nach dem Entladen durch neue Holzklötze und Gummimatten geschützt werden muss. Es kann auch vorkommen, dass sie durch fahrlässiges Handeln (Vergessen, Wegwerfen) nicht mehr auffindbar und somit nicht wieder verwendbar sind. Obendrein ist diese Art der Segmentsicherung mit Gefahren für die ausführende Person verbunden.

Als allgemeiner Stand der Technik wird auf die DD 154 785 A3 verwiesen.

WO 2007/093854 A2 zeigt einen Stützfuß mit einer Bodenplatte zur Aufnahme eines Endes eines Segmentes, eine Befestigungseinheit zur lösbaren Befestigung an dem ersten Ende des Segmentes und ein Seitenteil, welches an der Bodenplatte befestigt ist.

EP 2 159 412 A1 zeigt eine Klemmeinheit zum Klemmen an einem Teil einer Windenergieanlage.

Es ist eine Aufgabe der vorliegenden Erfindung, einen Schutzfuß für ein Turmschuss-Segment, zur Verwendung während des.Transports und der Lagerung vorzusehen.

Diese Aufgabe wird durch einen Schutzfuß nach Anspruch 1 gelöst.

Der Schutzfuß weist eine Bodenplatte und wenigstens einen Befestigungsabschnitt zur lösbaren Befestigung des Fußes an dem Turmsegment auf. Mindestens ein Seitenteil ist an der Bodenplatte befestigt. Die Bodenplatte weist eine Befestigungseinheit in Form einer Spreizeinheit mit einer Schraube auf. Die Spreizeinheit wird in ein Loch in dem Segment eingeführt und durch Hineindrehen der Schraube befestigt.

Die Erfindung betrifft den Gedanken, einen Schutzfuß vorzusehen, der dauerhaft aber lösbar mit dem einen Turmschuss-Segment verbunden ist. Dies reduziert den Aufwand zur Sicherung des Segments während des Transports und der Zwischenlagerung erheblich. Die üblicherweise bei Verladungen anfallenden Arbeitsschritte zum Schutz eines Turmschuss-Segmentes können größtenteils entfallen, was Zeit und somit Kosten spart. Ebenso wird durch das Wegfallen der Sicherungsschritte während des Transportes die Gefahr für das Transportpersonal erheblich reduziert.

Wenn ein solcher Fuß zusätzlich einfach arretierbar und (de-) montierbar ist, lässt er sich für weitere Einsätze wieder verwenden, wodurch Ressourcen geschont und Kosten reduziert werden. Dies wird zusätzlich durch eine kompakte Bauform des Fußes unterstützt, da ein Rück- oder Weitertransport nicht unnötig erschwert wird.

Die Wiederverwendbarkeit wird weiterhin dadurch unterstützt, dass Polyurethan als Fertigungsmaterial verwendet wird. Somit kann der Fuß durch Auffüllen repariert werden. Damit wird ein beschädigter Fuß nicht entsorgt, sondern repariert und weiter verwendet.

Durch Anbringen von Seitenteilen an der Bodenplatte kann ein Schutz des Turmschuss-Segmentes vor horizontalen Schäden im Transportumgang erreicht werden. Weiterhin können senkrecht von der Bodenplatte abgehende Seitenteile als Anlegefläche für Stopperplatten zur Sicherung von Ladung gegen horizontale Bewegung dienen.

Eine Entwässerungssicke ermöglicht es, eingedrungenes Wasser abzuführen, welches sich ansonsten sammeln und z.B. bei Frost Beschädigungen durch Verformung verursachen könnte.

Zum Schutz gegen Verrutschen eines Turmschuss-Segmentes auf dem Transportboden kann in die Unterseite des Fußes eine Gummibeschichtung oder eine Anti-Rutscheinheit (Anti-Rutsch-Matte) eingeklebt werden. Als weitere Verbesserung und zum Schutz gegen Verrutschen sowohl des Turmschuss-Segmentes auf dem Fuß als auch der gesamten Ladung auf dem Transportboden kann der gesamte Fuß mit einer Gummibeschichtung versehen werden. Dies ist insofern wichtig, als dass der Fuß die Scherkräfte, die bei horizontaler Bewegung von schweren Turmschuss-Segmenten entstehen, nicht aufnehmen kann. Die Gummierung sorgt erfahrungsgemäß für ausreichende Bremswirkung. Eine dauerhafte Gummierung macht das Unterlegen von separaten Gummimatten überflüssig.

Weitere Ausgestaltungen der Erfindung sind Gegenstand der Unteransprüche.

Vorteile und Ausführungsbeispiele der Erfindung werden nachstehend unter Bezugnahme auf die Zeichnungen näher erläutert.
- Fig. 1: zeigt eine schematische Schnittansicht eines Schutzfußes,
- Fig. 2: zeigt eine schematische Schnittansicht eines Schutzfußes,
- Fig. 3: zeigt eine schematische Schnittansicht eines Schutzfußes,
- Fig. 4: zeigt eine Schnittansicht eines Schutzfußes,
- Fig. 5: zeigt eine schematische Darstellung eines Schutzfußes gemäß einem Ausführungsbeispiel,
- Fig. 6: zeigt eine schematische Schnittansicht eines Schutzfußes gemäß einem Ausführungsbeispiel,
- Fig. 7: zeigt eine schematische Schnittansicht eines Schutzfußes gemäß einem Ausführungsbeispiel,
- Fig. 8: zeigt eine schematische Schnittansicht eines Schutzfußes gemäß einem Ausführungsbeispiel, und
- Fig. 9: zeigt eine schematische Ansicht eines Stückgutes mit einem Schutzfuß gemäß einem Ausführungsbeispiel.

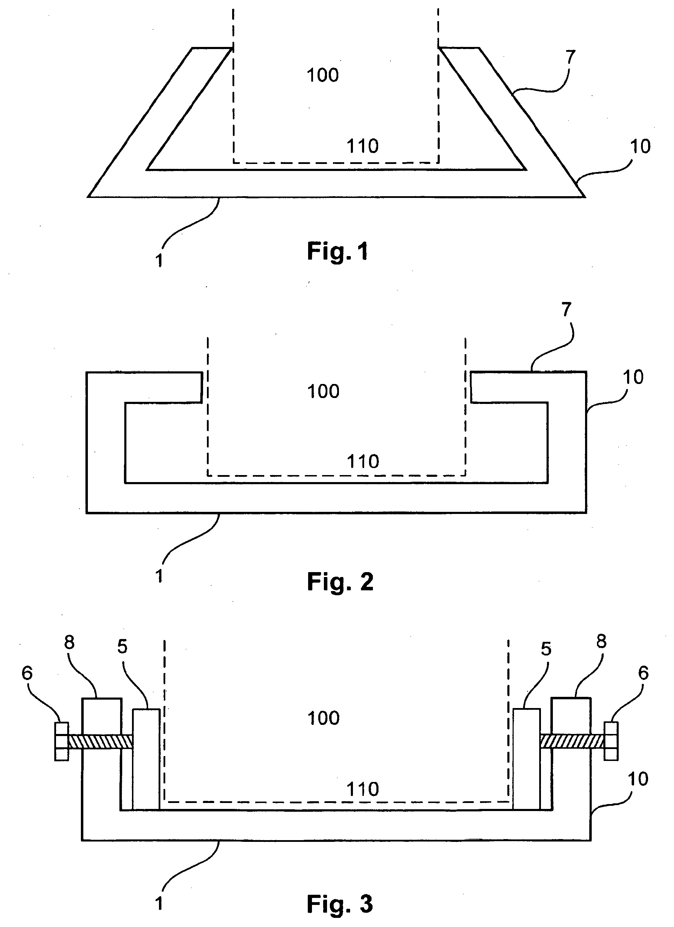

Fig. 1 zeigt eine Schnittansicht eines Schutzfußes. Der Schutzfuß weist eine Bodenplatte 1 und Seitenteile 7 auf. Für Stückgut 100, wie z. B. ein Turmschuss-Segment einer Windenergieanlage, lässt sich der Fuß 10 gemäß Fig. 1 am Stückgut bzw. am ersten Ende 110 des Stückguts befestigen. Dies kann durch mit der Bodenplatte 1 verbundene, nach innen geneigte Seitenteile 7 erfolgen, welche beim Aufsetzen des Fußes nach außen gespannt werden und sich nach Entspannung seitlich an das Stückgut 100 pressen. Durch erneutes Spannen der Seitenteile 7 lässt sich der Fuß einfach wieder demontieren.

Auf einer Unterseite 1a der Bodenplatte 1 kann optional eine erste Anti-Rutscheinheit (Anti-Rutsch-Matte) 200 vorgesehen sein. Ferner kann optional eine zweite Anti-Rutscheinheit (Anti-Rutsch-Matte) 210 auf einer oberen Seite 1 b der Bodenplatte 1 vorgesehen sein.

Fig. 2 zeigt eine schematische Schnittansicht eines Schutzfußes. Das Beispiel stellt ein alternatives Beispiel zu dem in Fig. 1 gezeigten Beispiel dar. Der Schutzfuß 10 weist eine Bodenplatte 1 und Seitenteile 7 auf. Hierbei sind die Seitenteile 7 nicht geneigt, sondern stehen rechtwinklig von der Bodenplatte 1 ab. Derart geformte Seitenteile 7 können gleichzeitig zur Aufnahme von Stopperplatten zur Sicherung gegen horizontale Bewegungen z. B. auf Transportschiffen dienen.

Auf einer Unterseite 1a der Bodenplatte 1 kann optional eine erste Anti-Rutscheinheit (Anti-Rutsch-Matte) 200 vorgesehen sein. Ferner kann optional eine zweite Anti-Rutscheinheit (Anti-Rutsch-Matte) 210 auf einer oberen Seite 1 b der Bodenplatte 1 vorgesehen sein.

Fig. 3 zeigt eine schematische Schnittansicht eines Schutzfußes. Der Schutzfuß 10 weist eine Bodenplatte 1 sowie Seitenteile 8 auf. Die Seitenteile 8 sind hierbei nicht wie gemäß dem ersten und zweiten Ausführungsbeispiel vorgespannt. An den Seitenteilen 8 sind bewegliche Backen 5 vorgesehen, welche jeweils nach dem Prinzip eines Schraubstockes mittels einer Stellschraube 6 gegen das Stückgut 100 bzw. gegen das erste Ende 110 des Stückguts gepresst werden können. Durch ein einfaches Lösen der Backen 5 kann der Schutzfuß 1 von dem Stückgut 100 gelöst werden.

Auf einer Unterseite 1a der Bodenplatte 1 kann optional eine erste Anti-Rutscheinheit (Anti-Rutsch-Matte) 200 vorgesehen sein. Ferner kann optional eine zweite Anti-Rutscheinheit (Anti-Rutsch-Matte) 210 auf einer oberen Seite 1 b der Bodenplatte 1 vorgesehen sein.

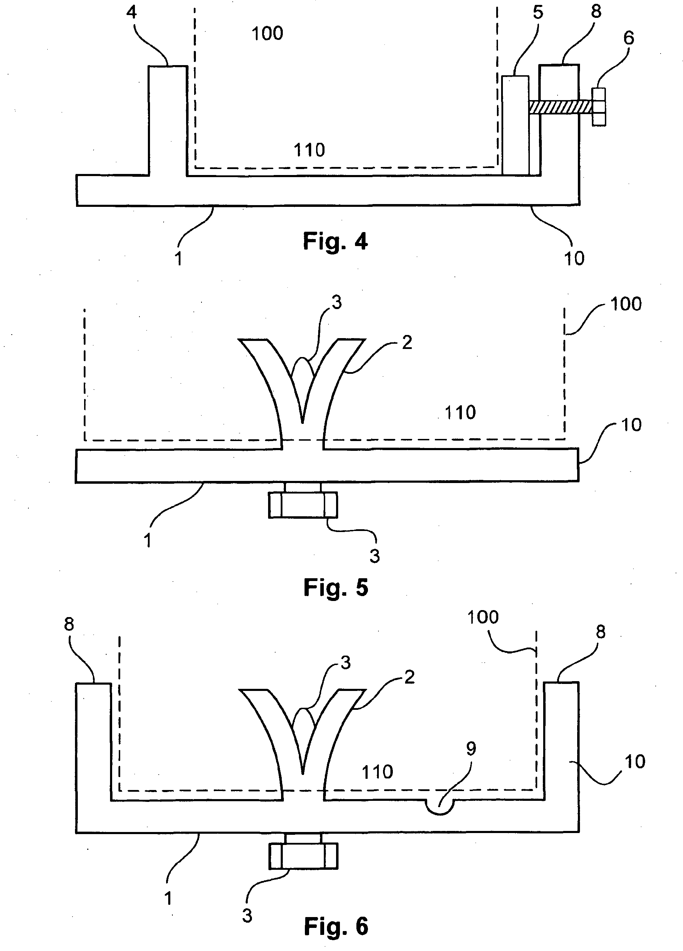

Fig. 4 zeigt eine schematische Schnittansicht eines Schutzfußes. Der Schutzfuß 10 weist hierbei eine Bodenplatte 1 sowie ein erstes und zweites Seitenteil 4, 8 auf. Die ersten und zweiten Seitenteile 4, 8 sind vorzugsweise nicht vorgespannt (wie im ersten und zweiten Ausführungsbeispiel) vorgesehen. An dem ersten Seitenteil können bewegliche Backen 5 vorgesehen sein, welche nach dem Schraubstockprinzip mittels einer Stellschraube 6 gegen das Stückgut 100 gepresst werden können. Das zweite Seitenteil 4 weist vorzugsweise keine Spannvorrichtung auf, so dass der Schutzfuß mittels der Backen 5 und der Stellschraube 6 an einem unteren Ende des Stückgutes 100 befestigt wird. Die Seitenteile können zur Aufnahme von Stolperplatten und zur Sicherung gegen eine horizontale Bewegung dienen.

Auf einer Unterseite 1a der Bodenplatte 1 kann optional eine erste Anti-Rutscheinheit (Anti-Rutsch-Matte) 200 vorgesehen sein. Ferner kann optional eine zweite Anti-Rutscheinheit (Anti-Rutsch-Matte) 210 auf einer oberen Seite 1 b der Bodenplatte 1 vorgesehen sein.

Fig. 5 zeigt eine schematische Darstellung eines Schutzfußes 10 gemäß einem Ausführungsbeispiel. Hierbei weist der Schutzfuß 10 eine Bodenplatte 1 sowie eine Befestigungseinheit 2, 3 zur Befestigung des Schutzfußes 10 an dem Stückgut 100 auf. Die Befestigungseinheit weist eine Spreizeinheit 2 und eine Schraube 3 auf, welche nach dem Prinzip des Dübels verwendet werden können, d. h., wenn die Schraube 3 in die Spreizeinheit 2 gedreht wird, dann wird sich die Spreizeinheit 2 aufweiten, so dass die Befestigungseinheit in einem Loch in dem Stückgut 100 befestigt werden kann. Durch Anziehen der Schraube 3 kann somit der Schutzfuß an dem Stückgut 100 befestigt werden. Das fünfte Ausführungsbeispiel ist insbesondere vorteilhaft bei Stückgütern 100, deren Seitenflächen nicht rechtwinklig von der Grundfläche abgehen.

Auf einer Unterseite 1a der Bodenplatte 1 kann optional eine erste Anti-Rutscheinheit (Anti-Rutsch-Matte) 200 vorgesehen sein. Ferner kann optional eine zweite Anti-Rutscheinheit (Anti-Rutsch-Matte) 210 auf einer oberen Seite 1 b der Bodenplatte 1 vorgesehen sein.

Fig. 6 zeigt eine schematische Schnittansicht eines Schutzfußes gemäß einem Ausführungsbeispiel. Der Schutzfuß 10 weist eine Bodenplatte 1 sowie Seitenwände 8 auf. Der Schutzfuß 10 weist ferner eine Befestigungseinheit 2, 3 sowie optional eine Entwässerungssicke 9 auf. Die Befestigungseinheit gemäß dem sechsten Ausführungsbeispiel entspricht dabei der Befestigungseinheit gemäß dem fünften Ausführungsbeispiel. Die Entwässerungssicke 9 kann an der Oberseite der Bodenplatte 1 vorgesehen sein und dient dem Schutzfuß. Durch die Entwässerungssicke 9 kann Wasser, das sich in dem Schutzfuß befindet, abfließen. Somit kann verhindert werden, dass sich Wasser bzw. Feuchtigkeit staut und sich bei Frost ausdehnen kann und zu Schäden am Stückgut 100 führen kann.

Auf einer Unterseite 1a der Bodenplatte 1 kann optional eine erste Anti-Rutscheinheit (Anti-Rutsch-Matte) 200 vorgesehen sein. Ferner kann optional eine zweite Anti-Rutscheinheit (Anti-Rutsch-Matte) 210 auf einer oberen Seite 1 b der Bodenplatte 1 vorgesehen sein.

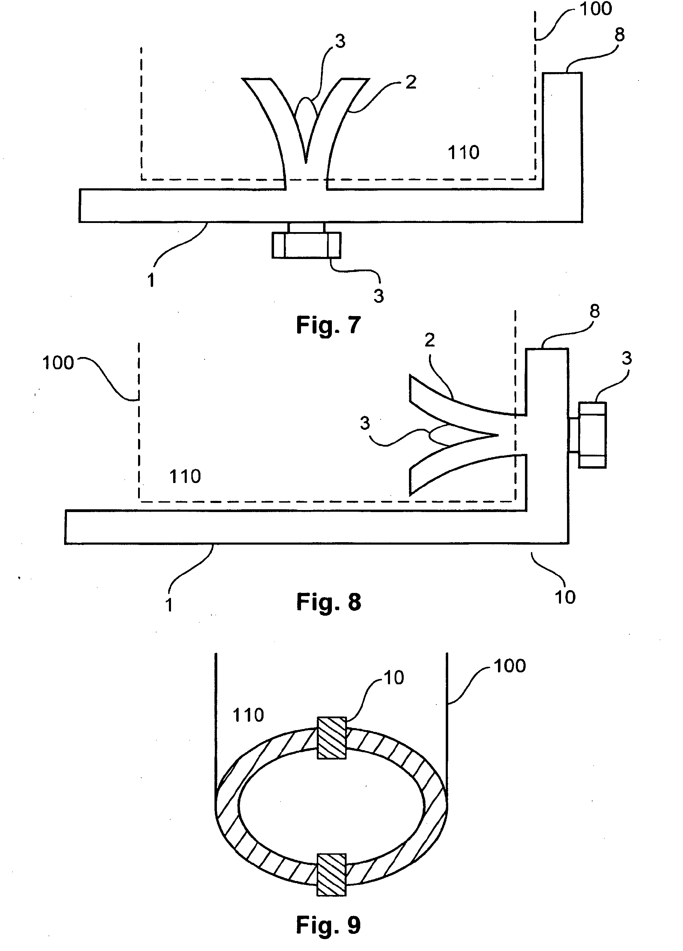

Fig. 7 zeigt eine schematische Schnittansicht eines Schutzfußes gemäß einem Ausführungsbeispiel. Hierbei weist der Schutzfuß 10 eine Bodenplatte 1 sowie eine Seitenwand 8 und eine Befestigungseinheit 2, 3 auf. Die Befestigungseinheit gemäß dem siebten Ausführungsbeispiel entspricht dabei im Wesentlichen der Befestigungseinheit gemäß dem fünften oder sechsten Ausführungsbeispiel. Hierbei ist die Befestigungseinheit in der Bodenplatte 1 vorgesehen.

Fig. 8 zeigt eine schematische Schnittansicht eines Schutzfußes gemäß einem Ausführungsbeispiel. Hierbei weist der Schutzfuß 10 eine Bodenplatte 1 sowie ein Seitenteil 8 auf. Eine Befestigungseinheit 2, 3 kann hierbei in dem Seitenteil 8 vorgesehen sein. Die Befestigungseinheit gemäß dem achten Ausführungsbeispiel kann dabei der Befestigungseinheit gemäß dem fünften, sechsten oder siebten Ausführungsbeispiel entsprechen.

Um seitlichen Schutz für Stückgüter zu erreichen, kann der Fuß gemäß Fig. 6 Seitenwände 8 aufweisen, die gleichzeitig zur Aufnahme von Stopperplatten, wie sie bei Schiffstransporten verwendet werden, dienen können. Fig. 6 zeigt außerdem eine Entwässerungssicke 9, welche dafür sorgt, dass sich keine Feuchtigkeit staut, die z.B. durch Ausdehnung bei Frost erhebliche Schäden am Stückgut verursachen kann.

Das Turmschuss-Segment kann als ein Turmschuss-Betonfertigteil bzw. Betonturmsegment insbesondere für einen Turm einer Windenergieanlage ausgestaltet sein.

Gemäß einem weiteren Ausführungsbeispiel der Erfindung ist die Bodenplatte 1 und/oder die Seitenteile 8 mit einer Dicke von ca. 4 - 5 cm ausgestaltet.

Auf einer Unterseite 1a der Bodenplatte 1 kann optional eine erste Anti-Rutscheinheit (Anti-Rutsch-Matte) 200 vorgesehen sein. Ferner kann optional eine zweite Anti-Rutscheinheit (Anti-Rutsch-Matte) 210 auf einer oberen Seite 1 b der Bodenplatte 1 vorgesehen sein.

Fig. 9 zeigt eine schematische Ansicht eines Stückgutes 100 und einen Schutzfuß 10 gemäß einem Ausführungsbeispiel. Der Schutzfuß gemäß dem neunten Ausführungsbeispiel kann auf einer der vorherigen oder einer Kombination der vorherigen Ausführungsbeispiele beruhen.

Gemäß einem weiteren Ausführungsbeispiel der Erfindung können die Befestigungseinheiten (Spreizeinheit) in an der Stirnseite des Turmschusses befindlichen Löchern befestigt werden. Somit kann eine einfache Handhabung bei der Montage und Demontage sowohl in einer Fabrik als auch an der Baustelle erfolgen. Durch die Bodenplatte 1 kann ein erstes Ende eines Stückgutes bzw. eines Betonturmsegmentes bzw. eines Turmschuss-Segmentes bzw. eines Turmschusses vor Abplatzungen beim Absetzen oder Transport geschützt werden.

Auf einer Unterseite 1 a der Bodenplatte 1 kann optional eine erste Anti-Rutscheinheit (Anti-Rutsch-Matte) 200 vorgesehen sein. Ferner kann optional eine zweite Anti-Rutscheinheit (Anti-Rutsch-Matte) 210 auf einer oberen Seite 1 b der Bodenplatte 1 vorgesehen sein.

## Patentansprüche

1. Schutzfuß für ein Turmschuss-Segment bzw. ein Betonturmsegment einer Windenergieanlage, mit
einer Bodenplatte (1) zur Aufnahme eines Endes des Segmentes (100) und
einer Befestigungseinheit zur lösbaren Befestigung an dem ersten Ende des Segmentes, und
mindestens einem Seitenteil (4, 8), welches an der Bodenplatte (1) befestigt ist, **dadurch gekennzeichnet, dass** die Befestigungseinheit als eine Spreizeinheit (2) mit einer Schraube (3) ausgestaltet ist,
wobei die Spreizeinheit (2) in ein Loch in dem Segment einführbar ist,
wobei die Spreizeinheit (2) durch Hineindrehen der Schraube (3) gespreizt wird und die Spreizeinheit (2) in dem Loch in dem Segment befestigbar ist.

2. Schutzfuß nach Anspruch 1, wobei
die Grundplatte (1) und/oder die Seitenteile (8) ein Grundmaterial aus Polyurethan aufweisen.

3. Schutzfuß nach einem der Ansprüche 1 bis 2, ferner mit
einer Anti-Rutscheinheit auf einer Unterseite (1a) der Bodenplatte (1) und/oder auf einem Teil einer Oberseite (1b) der Bodenplatte (1).

4. Turmschuss-Segment einer Windenergieanlage mit mindestens einem Schutzfuß nach einem der Ansprüche 1 - 3.

## Claims

1. Protective base for a tower section segment or a concrete tower segment of a wind turbine, having
a base plate (1) for receiving one end of the segment (100) and
a fixing unit for releasably fixing to the first end of the segment, and
at least one lateral portion (4, 8) which is fixed to the base plate (1),
**characterised in that** the fixing unit is constructed as an expansion unit (2) having a screw (3),
wherein the expansion unit (2) can be introduced into a hole in the segment,
wherein the expansion unit (2) is expanded by the screw (3) being rotated inwards and the expansion unit (2) can be fixed in the hole in the segment.

2. Protective base according to claim 1,
wherein the base plate (1) and/or the lateral portions (8) has/have a base material of polyurethane.

3. Protective base according to either claim 1 or 2, further having
an anti-sliding unit on a lower side (1a) of the base plate (1) and/or on a portion of an upper side (1b) of the base plate (1).

4. Tower section segment of a wind turbine having at least one protective base according to any one of claims 1 to 3.

## Revendications

1. Pied de protection pour un segment de mât de tour ou un segment de tour en béton d'une éolienne, comprenant
une plaque de sol (1) servant à recevoir une extrémité du segment (100) et
une unité de fixation destinée à être fixée de façon démontable au niveau de la première extrémité du segment, et
au moins une partie latérale (4, 8), qui est fixée à la plaque au sol (1),
**caractérisé en ce que** l'unité de fixation est configurée sous la forme d'une unité d'écartement (2) pourvue d'une vis (3),
sachant que l'unité d'écartement (2) peut être introduite dans un trou dans le segment,
sachant que l'unité d'écartement (2) est écartée par l'action visant à introduire par rotation la vis (3) et que l'unité d'écartement (2) peut être fixée dans le trou dans le segment.

2. Pied de protection selon la revendication 1, sachant
que la plaque de base (1) et/ou les parties latérales (8) présentent un matériau de base composé de polyuréthane.

3. Pied de protection selon l'une quelconque des revendications 1 à 2, comprenant en outre
une unité antidérapante sur un côté inférieur (1a) de la plaque de sol (1) et/ou sur une partie d'un côté supérieur (1b) de la plaque de sol (1).

4. Segment de mât de tour d'une éolienne comprenant au moins un pied de protection selon l'une quelconque des revendications 1 à 3.
